Europäisches Patentamt

European Patent Office

Office européen des brevets

(19)

(11) Veröffentlichungsnummer : **0 489 038 B1**

# (12) EUROPÄISCHE PATENTSCHRIFT

(45) Veröffentlichungstag der Patentschrift :
**19.04.95 Patentblatt 95/16**

(51) Int. Cl.$^6$ : **H04N 9/28**, H04N 3/233

(21) Anmeldenummer : **90912040.4**

(22) Anmeldetag : **14.08.90**

(86) Internationale Anmeldenummer :
**PCT/EP90/01332**

(87) Internationale Veröffentlichungsnummer :
**WO 91/03129 07.03.91 Gazette 91/06**

(54) SCHALTUNG ZUR RASTERKORREKTUR IN EINEM FERNSEHGERÄT.

(30) Priorität : **23.08.89 DE 3927677**

(43) Veröffentlichungstag der Anmeldung :
**10.06.92 Patentblatt 92/24**

(45) Bekanntmachung des Hinweises auf die
Patenterteilung :
**19.04.95 Patentblatt 95/16**

(84) Benannte Vertragsstaaten :
**AT BE CH DE DK ES FR GB IT LI LU NL SE**

(56) Entgegenhaltungen :
**EP-A- 0 291 924**
**GB-A- 2 101 459**
**US-A- 4 422 019**
**PATENT ABSTRACTS OF JAPAN, Band 12, Nr.**
**187 (E-615)(3034), 31. Mai 1988, & JP, A,**
**62291283 (Hitachi Ltd) 18. Dezember 1987**
**siehe die Zusammenfassung**

(73) Patentinhaber : **DEUTSCHE**
**THOMSON-BRANDT GMBH**
**Hermann-Schwer-Strasse 3**
**D-78048 Villingen-Schwenningen (DE)**

(72) Erfinder : **GLEIM, Günter**
**Oberer Sonnenbühl 22**
**D-7730 Villingen (DE)**
Erfinder : **HEIZMANN, Friedrich**
**Im Oberdorf 17**
**D-7731 Pfaffenweiler (DE)**
Erfinder : **SCHEMMANN, Heinrich**
**Am Schwalbenhaag 2**
**D-7730 Villingen (DE)**
Erfinder : **CHAUVIN, Jacques**
**Martin Luther St. 21**
**D-7733 Mönchweiler (DE)**

(74) Vertreter : **Einsel, Robert, Dipl.-Ing.**
**Deutsche Thomson-Brandt GmbH**
**Patent- und Lizenzabteilung**
**Göttinger Chaussee 76**
**D-30453 Hannover (DE)**

EP 0 489 038 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Schaltung zur Rasterkorrektur in einem Fernsehgerät gemäß dem Oberbegriff des Anspruchs 1.

Derartige Maßnahmen zur Rasterkorrektur sind insbesondere bei Projektions-Fernsehgeräten notwendig, weil dort die drei auf der Projektionsfläche überlagerten Bilder für R, G, B durch drei räumlich getrennte, je mit einer Ablenkeinheit arbeitende Bildröhren erzeugt werden. Die Rasterkorrektur dient dabei allgemein zum Ausgleich von Geometriefehlern in dem auf der Projektionsfläche beschriebenen Raster, z.B. zum Ausgleich von Nord/Süd- oder Ost/West-Fehlern, zur Beseitigung von nicht Linearitäten in der Ablenkung oder zur Erzielung der Konvergenz zwischen den drei Strahlen für R, G, B.

Bei einer derartigen Konvergenzeinrichtung wird auf der Projektionsfläche ein Gitterraster aus waagerechten und senkrechten Linien gebildet. Für die Kreuzungspunkte des Gitterrasters werden Korrekturwerte für die Konvergenz der drei Farben rot, grün, blau in waagerechter und senkrechter Richtung ermittelt. Diese Korrekturwerte werden gespeichert und dienen bei der Abtastung des Bildschirms nacheinander zur Korrektur der Konvergenz an den einzelnen Kreuzungspunkten. Da die Korrekturwerte nur für die Kreuzungspunkte gelten, erfolgt zwischen zwei Kreuzungspunkten jeweils eine lineare Interpolation von einem Korrekturwert zum nächsten. Dabei ist es notwendig, zwischen zwei aufeinanderfolgenden Kreuzungspunkten, z.B. in senkrechter Richtung, linear von einem Korrekturwert auf den nächsten überzublenden.

Derartige Projektionsgeräte arbeiten andererseits in verschiedenen Modes mit unterschiedlicher Anzahl von Zeilen zwischen zwei in Vertikalrichtung übereinanderliegenden Kreuzungspunkten. Das ist der Fall, wenn zur Darstellung verschiedener Bildformate mit einer unterschiedlichen Vertikalablenkung gearbeitet wird und die Zahl der auf die wirksame Projektionsfläche fallenden Zeilen unterschiedlich ist, siehe z.B. EP-A-0 291 924.

Der Erfindung liegt die Aufgabe zugrunde, eine einfache Schaltung zur Erzeugung einer dreieckförmigen Spannung für die Überblendung zwischen zwei Korrekturwerten zu schaffen, die sich insbesondere an unterschiedliche Werte der Zeilen zwischen zwei Kreuzungspunkten anpaßt.

Diese Aufgabe wird durch die im Anspruch 1 angegebene Erfindung gelöst. Vorteilhafte Weiterbildungen der Erfindung sind in den abhängigen Ansprüchen angegeben.

Durch die erfindungsgemäße digital arbeitende Schaltung wird sichergestellt, daß jeweils nach einer genau definierten Zahl von Zeilen, die der Zahl von Zeilen zwischen zwei aufeinanderfolgenden Kreuzungspunkten entspricht, der Maximalwert der Dreieckspannung für die Überblendung erreicht ist. Durch die digitale Arbeitsweise, die vorzugsweise mit einem Prozessor eingestellt wird, werden Toleranzen weitestgehend ausgeschlossen, so daß die Schaltung auch bei unterschiedlicher Zeilenzahl zwischen zwei Kreuzungspunkten stets einwandfrei arbeitet und eine exakte lineare Interpolation bewirkt. Die Schaltung arbeitet also stets einwandfrei bei unterschiedlichen Modes, also unterschiedlichen Zeilenzahlen während der sichtbaren Bildfläche, also auch unterschiedlichen Zeilenzahlen zwischen zwei Kreuzungspunkten des Gitterrasters.

Die Erfindung wird anhand der Zeichnung am Beispiel der Konvergenzkorrektur für ein Projektions-Fernsehgerät erläutert. Darin zeigen

Fig. 1    im Prinzip die durch die Erfindung erzielbare Dreieckspannung für die Überblendung,

Fig. 2    ein Blockschaltbild der Erfindung und

Fig. 3    ein praktisches Ausführungsbeispiel der Schaltung gemäß Fig. 2.

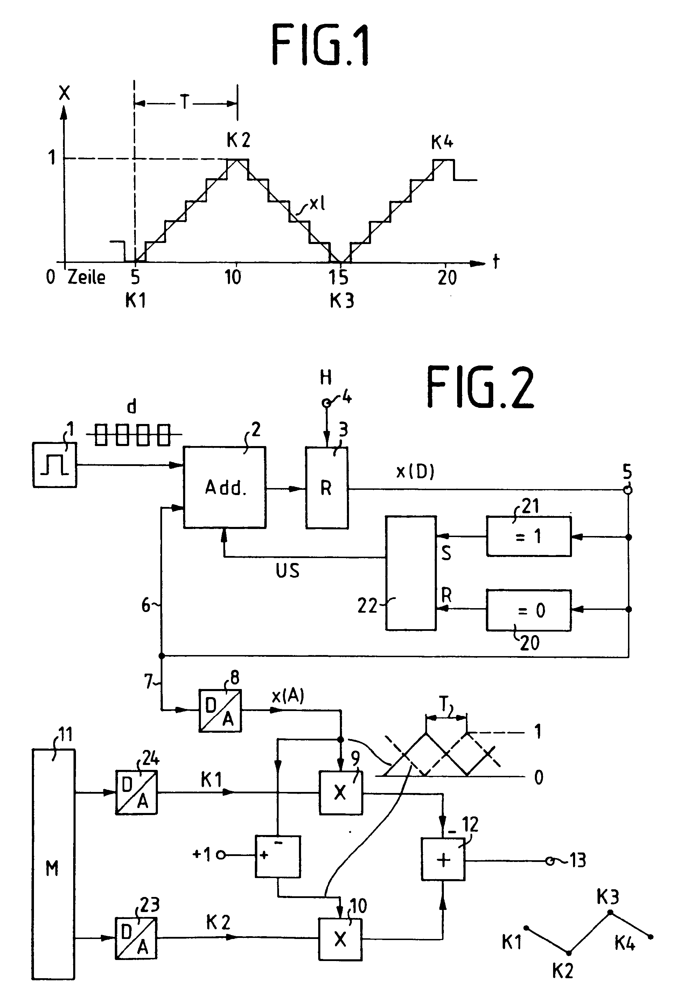

In Fig. 1 ist angenommen, daß Kreuzungspunkte des Gitterrasters in Vertikalrichtung einen Abstand von fünf Zeilen haben, also die Kreuzungspunkte bei den Zeilen 5, 10, 15, 20 .... liegen. Diesen Zeilen sind bei der Konvergenzeinstellung ermittelte und in Speichern abgelegte Konvergenz-Korrekturwerte K1, K2, K3, K4 zugeordnet, die im Regelfall von Kreuzungspunkt zu Kreuzungspunkt unterschiedlich sind. Es ist daher jeweils eine lineare Interpolation von einem Kreuzungspunkt zum nächsten Kreuzungspunkt erforderlich, d.h. ein kontinuierliches oder schrittweises Überblenden des wirksamen Konvergenzkorrekturwertes z.B. von K1 nach K2, K2 nach K3 usw. Dieses erfolgt durch die dargestellte treppenförmige Dreieckspannung x, die in fünf Stufen eine Änderung zwischen den Korrekturwerten K1, K2, K3, K4 bewirkt. Diese treppenförmige Korrekturspannung x wirkt wie die ebenfalls eingezeichnete lineare Dreieckspannung x1.

Fig. 2 zeigt eine Schaltung für die Erzielung der Überblendung von einem Korrekturwert K zum nächsten. Ein Register 1 liefert eine Folge von gleichen digitalen Wörtern d, und zwar jeweils ein Wort d in jeder der N Zeilen zwischen zwei Korrekturwerten K. Diese digitalen Wörter werden dem Addierer 2 zugeführt, dessen Ausgang an den Eingang des Registers 3 angeschlossen ist. An das Register 3 ist von der Klemme 4 eine Folge zeilenfrequenter Impulse H angelegt. Der Ausgang 5 des Registers 3 ist über die Leitung 6 mit einem zweiten Eingang des Addierers 2 verbunden und liefert außerdem die treppenförmige Spannung x in digitaler Form, mit x(D) bezeichnet. Dadurch, daß der Ausgangswert des Registers 3 jeweils an den Addierer 2 zurückgeführt und dem Addierer 2 in jeder Zeile ein weiteres digitales Wort d zugeführt wird, entsteht am Ausgang 5 des Registers 3 das treppenförmige Signal x gemäß Fig. 1, das jeweils während einer Zeile um eine Stufe ansteigt.

Nach der Zeit T zwischen zwei aufeinanderfolgenden Kreuzungspunkten und Korrekturwerten erkennt die Decodierschaltung 21 daß x(D) den Wert 1 erreicht hat. Sie gibt an den Eingang S von RS-Flipflop 22 ein Signal. Dadurch ändert Flipflop 22 seinen Zustand und damit den Wert US an seinem Ausgang, der mit einem Steuereingang von Addierer 2 verbunden ist. Es erfolgt eine Umsteuerung in der Funktion des Addierers 2 in dem Sinne, daß während der nächsten Zeit T, also in Fig. 1 zwischen K2 und K3, von dem Ausgangswert des Registers 3 in dem Addierer 3 ein digitales Wort d subtrahiert wird, so daß der Wert x stufenweise wieder abnimmt und der dreieckförmigen Spannung x1 angenähert wird.

Am Punkt K3 erreicht x(D) wieder den Wert 0. Dieser Wert wird von dem Decoder 20 erkannt. RS-Flipflop 22 wird über Eingang R zurückgesetzt, damit wird der Wert von US geändert und steuert Addierer 2 in den Additionszustand.

Das digitale Signal x(D) vom Ausgang 5 wird über die Leitung 7 dem D/A-Wandler 8 zugeführt, der daraufhin eine analoge Spannung x(A) erzeugt. Diese ideale Treppenspannung liegt in der Praxis geglättet durch einen Tiefpass vor, ist also der der idealen linearen Dreieckform x1 gemäß Fig. 1 angenähert. Einerseits gelangt diese Spannung als Steuerspannung auf die Multiplikationsstufe 9 und als Wert (+1-x), also in der gestrichelt angedeuteten Form, auf die Multiplikationsstufe 10.

Der Speicher 11, in dem die Konvergenz-Korrekturwerte gespeichert sind, liefert über zwei D/A-Wandler 23, 24 im dargestellten Zeitaugenblick die Korrekturwerte K1, K2, die an die Eingänge der Multiplikationsstufen 9, 10 gelangen. In der Multiplikationsstufe 9 wird der Wert von K1 durch die Spannung x während der Zeit T vom Maximalwert 1 linear auf den Wert 0 verringert. Andererseits wird der Wert K2 in der Multiplikationsstufe 10 während der Zeit T vom Wert 0 auf den Maximalwert 1 erhöht. Die Ausgangsspannungen der Stufen 9, 10 werden in der Addierstufe 12 addiert. Das am Ausgang 13 entstehende Korrektursignal ist also jeweils während einer Zeit T eine lineare Interpolation zwischen aufeinanderfolgenden Korrekturwerten K1, K2, K3, K4. Die Schaltung bewirkt also ein lineares Überblenden jeweils zwischen zwei aufeinanderfolgenden Korrekturwerten der einzelnen Kreuzungspunkte, wie es für eine optimale Korrektur der Konvergenz jeweils für die zwischen zwei Kreuzungspunkten liegenden Zeilen gewünscht ist.

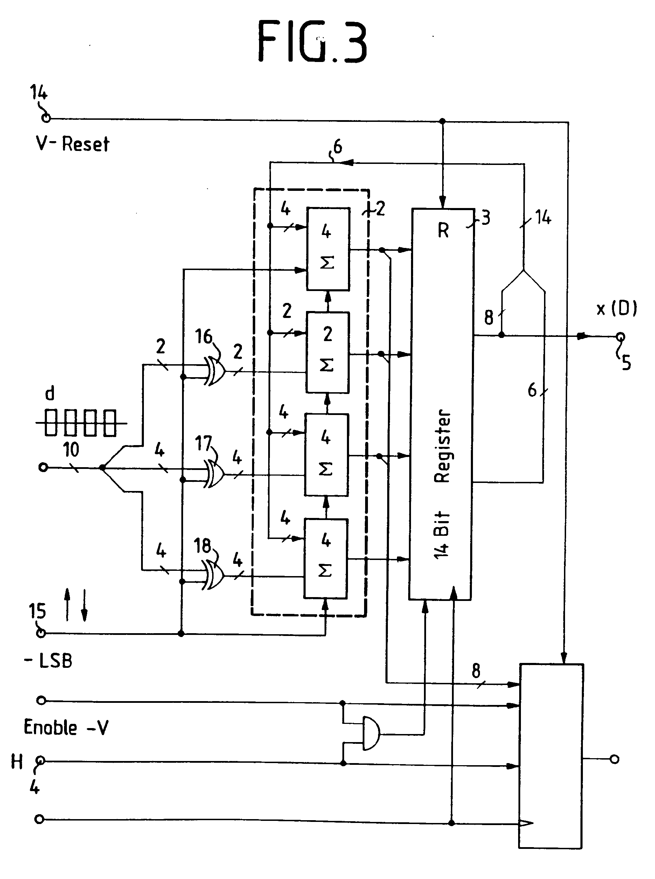

Fig. 3 zeigt eine praktisch erprobte Schaltung für den oberen Teil in Fig. 2 mit den Bauteilen 2, 3, 4, 5, 6. Der Eingang 14, mit V-Reset bezeichnet, dient zum Zurücksetzen auf null jeweils am Anfang eines Halbbildes. Der Eingang 15 bewirkt die beschriebene Umschaltung zwischen dem Hochzählen und dem Rückzählen (up/down) im Addierer 2 jeweils bei einem Kreuzungspunkt K. Der Addierer 2 ist durch die dargestellten vier Addierstufen jeweils mit zwei bzw. vier Bit gebildet. Die Umsteuerung zwischen dem Hochzählen und dem Rückzählen durch die digitalen Wörter d mit je 10 Bit erfolgt durch die EXOR-Gatter 16, 17, 18, die von dem LSB-Signal vom Eingang 15 jeweils an einem Kreuzungspunkt K umgesteuert werden. Das Register 3 arbeitet wie in Fig. 2 und liefert am Ausgang 5 das digitale Signal x(D) das die Dreieckspannung x gemäß Fig. 1 darstellt. Das Register 3 wird wie in Fig. 2 von den zeilenfrequenten Impulsen H von der Klemme 4 gesteuert. Für die Zahl N der Zeilen zwischen zwei Kreuzungspunkten (5 in Fig. 1) einerseits und den Zahlenwert von d andererseits ergeben sich je nach verwendetem Mode mit unterschiedlicher Vertikalablenkamplitude in der Praxis folgende Werte:

| N | d |
|---|---|
| 64 | 255 |
| 48 | 341 |
| 42 | 390 |
| 40 | 409 |
| 36 | 455 |
| 35 | 468 |
| 30 | 546 |
| 56 | 292 |
| 32 | 510 |
| 24 | 682 |
| 21 | 780 |
| 20 | 818 |
| 18 | 910 |

Die Umsteuerung jeweils bei einem Kreuzungspunkt K kann auch dadurch erfolgen, daß am Ausgang des Registers 3 ein Decoder vorgesehen ist, der den Maximalwert der Spannung x ermittelt und daraufhin die Umsteuerung auslöst. Die höchste dort erscheinende Binärzahl für den Maximalwert der Dreieckspannung x gemäß Fig. 1 beträgt z.B. 16383.

**Patentansprüche**

1. Schaltung zur Rasterkorrektur in einem Fernsehgerät, bei der Korrekturwerte für um N Zeilen beabstandete, durch ein Gitterraster definierte Kreuzungspunkte gespeichert sind und zwischen den Kreuzungspunkten eine Interpolation von einem Korrekturwert zum nächsten mittels einer Dreieckspannung erfolgt, **dadurch gekennzeichnet,** daß während jeder der N Zeilen das gleiche digitale Wort (d) an den Eingang eines Addierers (2) angelegt ist, dessen Ausgang mit einem Eingang eines von zeilenfrequenten Impulsen (H) gesteuerten Registers (3) verbunden ist, daß der Ausgang des Registers mit einem Eingang des Addierers (2) und dem Eingang eines die Dreiecksspannung (x) liefernden D/A-Wandlers (8) verbunden ist, daß abwechselnd jeweils von einem Kreuzungspunkt (K) zum nächsten das digitale Wort (d) zu dem Ausgangswert des Register (3) addiert und vom nächsten zum übernächsten Kreuzungspunkt (K) subtrahiert wird und daß die Korrekturwerte (K1, K2) für zwei in Vertikalrichtung untereinander liegende Kreuzungspunkte über zwei Multiplikationsstufen (9, 10) an eine die interpolierten Werte liefernde Addierstufe (12) angelegt sind und die Dreiecksspannung (x) an die Multiplikationsstufen (9, 10) im Sinne einer entgegengesetzten Änderung deren Multiplikationsfaktoren angelegt sind, und daß am Ausgang (13) ein entstehendes Korrektursignal jeweils während einer definierten Zeit (t) eine lineare Interpolation zwischen aufeinanderfolgenden Korrekturwerten (K1, K2, K3, K4) ausgibt.

2. Schaltung nach Anspruch 1, **dadurch gekennzeichnet,** daß die Zahl (N) der Zeilen, während der die digitalen Wörter (d) dem Addierer (2) zugeführt und im Addierer (2) zum Ausgangswert (x) des Registers (3) addiert oder subtrahiert werden, einstellbar ist.

3. Schaltung nach Anspruch 1, **dadurch gekennzeichnet,** daß vor dem Addierer (2) EXOR-Gatter (16 - 18) liegen, die jeweils bei einem Kreuzungspunkt (K) zur Umschaltung der Polarität der digitalen Wörter (d) umgesteuert werden (Fig. 3).

4. Schaltung nach Anspruch 1, **dadurch gekennzeichnet,** daß ein Decoder (21) vorgesehen ist, der den Maximalwert (16383) und ein weiterer Decoder (20) der den Minimalwert (0) am Ausgang des Registers (5) erkennt und daß von den Decodern eine Umsteuerung des Addierers (2) zwischen Addition und Sub-

4

traktion bzw. umgekehrt ausgelöst wird.

5. Schaltung nach Anspruch 1, **dadurch gekennzeichnet,** daß die Schaltung für eine Konvergenzeinrichtung in einem Fernseh-Projektionsgerät zur Interpolation der Konvergenz-Korrekturwerte (K) verwendet ist.

## Claims

1. A circuit for scanning pattern correction in a television device in which correction values for crossing points defined by a grid pattern and separated by N lines are stored and an interpolation from one correction value to the next takes place between the crossing points by means of a delta voltage, **characterised in that** during each of the N lines, the same digital word (d) is applied to the input of an adder (2), the output of which is connected to an input of a register (3) controlled by line-frequency pulses (H), in that the output of the register (3) is connected to an input of the adder (2) and the input of a D/A converter (8) supplying the delta voltage (x), in that, alternatingly, in each case from one crossing point (K) to the next, the digital word (d) is added to the output value of the register (3) and from the next to the next-but-one crossing point (K) is substracted, and in that the correction values (K1, K2) for two crossing points situated vertically one below the other are applied, via two multiplication stages (9, 10), to an adding stage (12) supplying the interpolated values, and the delta voltage (x) is applied to the multiplication stages (9, 10) in the sense of a reversing change of their multiplication factors, and in that at the output (13) a correction signal arising provides a respective linear interpolation during a defined time (t) between two successive correction values (K1, K2, K3, K4).

2. A circuit according to claim 1, **characterised in that** the number (N) of lines is adjustable during which the digital words (d) are fed to the adder (2) and added to or subtracted from the output value (x) of the register (3).

3. A circuit according to claim 1, **characterised in that** EXOR gates (16 - 18) are located prior to the adder (2), the gates being reversed in each case at a crossing point (K) for switching over the polarity of the digital words (d) (Fig. 3).

4. A circuit according to claim 1, **characterised in that** a decoder (21) is provided which detects the maximum value (16383) and a further decoder (20) which detects the minimum value (0) at the output of the register (5) and in that a switch-over of the adder (2) from addition to substraction or vice versa is triggered by the decoders.

5. A circuit according to claim 1, **characterised in that** the circuit is used as a convergence arrangement in a projection television device for interpolation of the convergence-correction values (K).

## Revendications

1. Circuit de correction de trame dans un téléviseur, dans lequel des valeurs de correction sont mémorisées pour des points d'intersection définis par une trame en grille, distants de N lignes et une interpolation d'une valeur de correction à la suivante est effectuée entre les points d'intersection à l'aide d'une tension triangulaire, **caractérisé par le fait** que pendant chacune des lignes N, le même mot numérique (d) est appliqué à l'entrée d'un additionneur (2), dont la sortie est connectée à l'entrée d'un registre (3) commandé par des impulsions à fréquence de ligne (H), que la sortie du registre est connectée à une entrée de l'additionneur (2) et à l'entrée d'un convertisseur N/A (8) qui fournit la tension triangulaire (x), que, alternativement, d'un point d'intersection (K) à l'autre, le mot numérique (d) est additionné à la valeur de sortie du registre (3) et soustrait du point d'intersection (K) suivant, que les valeurs de correction (K1, K2) pour deux points d'intersection disposés verticalement l'un sous l'autre sont appliquées par deux niveaux de multiplication (9, 10) à un niveau d'addition (12) délivrant les valeurs interpolées, que la tension triangulaire (x) est appliquée aux niveaux de multiplication (9, 10) au sens d'une modification inverse de leurs facteurs de multiplication et qu'à la sortie (13) un signal de correction délivre pendant un temps défini (t) une interpolation linéaire entre des valeurs de correction consécutives (K1, K2, K3, K4).

2. Circuit selon la revendication 1, **caractérisé par le fait** que le nombre (N) des lignes pendant lesquelles les mots numériques (d) sont dirigés vers l'additionneur (2) où elles sont additionnées à ou soustraites de la valeur de sortie (x) du registre (3), est réglable.

3. Circuit selon la revendication 1, **caractérisé par le fait** que des portes OU (16 - 18) sont situées en amont de l'additionneur (2); elles sont inversées à chaque point d'intersection (K) pour commuter la polarité des mots numériques (d) (figure 3).

4. Circuit selon la revendication 1, **caractérisé par le fait** qu'il est prévu un décodeur (21) qui identifie la valeur maximale (16383) et un autre décodeur (20) qui identifie la valeur minimale (0) à la sortie du registre (5) et que les détecteurs commutent l'additionneur (2) entre addition et soustraction ou inversement.

5. Circuit selon la revendication 1, **caractérisé par le fait** que le circuit est utilisé dans un équipement de convergence d'un téléviseur de projection pour l'interpolation des valeurs de correction de convergence (K).

# FIG.1

# FIG.2

# FIG.3